# EUROPEAN PATENT SPECIFICATION

(11) **EP 2 591 492 B1**
(45) Date of publication and mention of the grant of the patent: **06.03.2019**
(21) Application number: 11740858.3
(22) Date of filing: 05.07.2011
(51) Int. Cl.: H01J 43/30, G01T 1/28

(54) **DEVICE FOR MODIFYING THE SHAPE AND REDUCING THE DURATION OF THE CURRENT PULSES GENERATED BY SINGLE PHOTONS IN LIGHT DETECTORS OF VARIOUS TYPE SUCH AS PHOTOMULTIPLIERS**
VORRICHTUNG ZUR VERÄNDERUNG DER FORM UND VERRINGERUNG DER DAUER DER VON EINZELFOTONEN IN LICHTDETEKTOREN VERSCHIEDENER ART WIE ETWA FOTOMULTIPLIKATOREN ERZEUGTEN STROMIMPULSE
DISPOSITIF DESTINÉ À MODIFIER LA FORME ET À RÉDUIRE LA DURÉE DES IMPULSIONS DE COURANT PRODUITES PAR DES PHOTONS INDIVIDUELS DANS DES DÉTECTEURS DE LUMIÈRE DE DIFFÉRENTS TYPES, TELS QUE DES PHOTOMULTIPLICATEURS

(30) Priority: 05.07.2010 IT FI20100142
(43) Date of publication of application: 15.05.2013
(73) Proprietor: Dall'Oglio, Stefano, 20146 Milano (IT); Dall'oglio, Giorgio, 20146 Milano (IT)
(72) Inventor: Dall'Oglio, Stefano, 20146 Milano (IT); Dall'oglio, Giorgio, 20146 Milano (IT)
(74) Representative: Cinquantini, Bruno
(86) International application number: PCT/EP2011/061295
(87) International publication number: WO 2012/004252

(56) References cited:
- US-A- 3 173 110
- US-A- 3 389 578
- TSANKOV L T ET AL: "LC circuit as a pulse-height analyser for NaI gamma spectrometry", NUCLEAR INSTRUMENTS & METHODS IN PHYSICS RESEARCH, SECTION - A:ACCELERATORS, SPECTROMETERS, DETECTORS AND ASSOCIATED EQUIPMENT, ELSEVIER, AMSTERDAM, NL, vol. 533, no. 3, 11 November 2004 (2004-11-11), pages 509-515, XP004611717, ISSN: 0168-9002, DOI: DOI:10.1016/J.NIMA.2004.06.110
- HANSON ET AL: "Design and production of the IceCube digital optical module", NUCLEAR INSTRUMENTS & METHODS IN PHYSICS RESEARCH, SECTION - A:ACCELERATORS, SPECTROMETERS, DETECTORS AND ASSOCIATED EQUIPMENT, ELSEVIER, AMSTERDAM, NL, vol. 567, no. 1, 1 November 2006 (2006-11-01), pages 214-217, XP005720428, ISSN: 0168-9002, DOI: DOI:10.1016/J.NIMA.2006.05.091
- TETSUO IWATA ET AL: "Pseudo-Lock-in Light Detection Method for a Sinusoidally-Gain-Modula ted Photomultiplier Tube", OPTICAL REVIEW, SPRINGER, BERLIN, DE, vol. 11, no. 1, 1 January 2004 (2004-01-01), pages 19-23, XP019353176, ISSN: 1349-9432, DOI: DOI:10.1007/S10043-004-0019-1
- MITYO GEORGIEV MITEV ET AL: "OPTIMIZATION OF A RLC SHAPING CIRCUIT FOR NAI(TL) SCINTILLATION DETECTORS", ELECTRONICS,, 21 September 2005 (2005-09-21), XP007917935,
- GADALOV A N ET AL: "Logarithmic Amplitude-to-Digital Converter with a Damped Oscillating Circuit", INSTRUMENTS AND EXPERIMENTAL TECHNIQUES, CONSULTANTS BUREAU. NEW YORK, US, 1 January 1966 (1966-01-01), pages 1170-1172, XP008134694, ISSN: 0020-4412
- "Chapter 5. How to use Photomultiplier Tubes and Peripheral Circuits" In: Hamamatsu Editorial Committee: "PHOTOMULTIPLIER TUBES. BASICS AND APPLICATIONS (3RD EDITION)", 1 January 2006 (2006-01-01), HAMAMATSU PHOTONICS K K, JP, Pages 28, 83-112, XP007908696, the whole document

## Description

### FIELD OF THE INVENTION

The present invention concerns the detection of single photons, in particular via the use of photomultipliers.

### STATE OF THE ART

The problems connected with the use of photomultipliers to detect single photons which generate rapid current pulses for electronic counter circuits are known.

Said problems are accurately described in the technical report "Photon Counting using PMT", chapter 3, paragraph 3.4 (Ed. April 2001) by Hamamatsu Photonics K.K., and in greater detail in the Application Note TP-133 by the company Burle Electron Tubes U.S.A. These publications illustrate in detail how best to use the high response speed of the photomultiplier, below abbreviated to PMT, both by optimisation of the wiring and by matching the impedance of the interface line of the signal towards the electronic amplification and counter circuit.

In practice, however, these circuit solutions simply ensure that the quality of the pulse generated by the PMT anode does not deteriorate, but they do not consider the possibility of modifying the shape of the pulse.

The effects of different pulse shapes are described, for example, in the publication by Becker & Hickl GmbH, (Berlin, Germany) entitled "Detectors for high speed Photon Counting" on p. 6, fig. 11a and 11b which illustrate respectively the pulse of a normal PMT (typical of the PMT models 931 and 1P28) and that of a PMT with improved characteristics which is therefore much more expensive (typical of the PMT models R5600 and H5783).

The journal "Nuclear Instruments and Methods", N° 55 - Ed. North Holland Publishing Co., 1967, in the article on p. 357-380 by D.A. Gedcke and W.J. McDonald entitled "A Constant Fraction of Pulse Height Trigger for Optimum Time Resolution" proposes a solution to the problem of optimisation of the use of photomultipliers for the detection of single photons which exploits modification of the pulse shape, but acting only downstream of the main pulse generated by the PMT. A solution of this type is used in the instruments of the company ORTEC 801 (South Illinois Ave., Oak Ridge, TN - U.S.A.), as described in the application note AN51, and the company ELECTRON TUBES Ltd. (Ruislip, Bury Street 7ta, UK.), as described in the application note R/P096.

The journal "Nuclear Instruments & Methods in Physics Research, Section A", vol. 533, 2004, pages 509-515, XP004611717, DOI: 10.1016/J.NIMA.2004.06.110, in the article by Tsankov et al entitled "LC circuit as a pulse-height analyser for Nal gamma spectrometry" discloses a device comprising a photomultiplier tube, a high voltage power supply unit and a pulse modification circuit comprising an LC filter of parallel type, a resistor and a capacitor.

All the solutions available in the state of the art entail the use of superior quality PMTs which are very costly. The solution described in the present patent application solves the technical problem previously described in a technically simple and much less costly manner, furthermore offering additional advantages with respect to the solutions currently used.

The invention subject of the present patent application allows the use of an ordinary low cost PMT to obtain results typical of much more costly PMTs, characterised by the production of a signal having pulse rise and fall times very close to each other.

### SUMMARY OF THE INVENTION

The present invention provides a device according to claim 1 and a device according to claim 4. Preferred embodiments are defined in the dependent claims.

### BRIEF DESCRIPTION OF THE FIGURES

Fig. 1 illustrates a functional block diagram of the device according to the present invention.
Fig. 2 illustrates the wiring diagram of a preferred embodiment of said circuit of the pulse modification circuit 13.
Fig. 3 illustrates the amplitude-time waveforms of two output pulses towards the coaxial interface line 16 in the arrangement, according to the known art, with 50 Ohm resistor between PMT plate and ground.
Fig. 4 illustrates the amplitude-time waveforms of two output pulses towards the coaxial interface line 16, in the new arrangement which entails insertion of the pulse modification circuit subject of the present patent between the PMT plate resistor and ground.
Fig. 5 illustrates an example of mechanical mounting of the subject of the present invention in which the various component parts are indicated.
Fig. 6a illustrates a further preferred embodiment of the device according to the present invention.
Fig. 6b illustrates a further example device outside the scope of the present invention.

### DETAILED DISCLOSURE OF THE INVENTION

In the preferred embodiment of the present invention described below, a Hamamatsu PMT device model 1P28 was used, which is one of the cheapest PMTs available on the market; however, the system described can be used with any other model of PMT, barring any obvious modifications required by the different technical characteristics of the model of PMT used to replace the Hamamatsu PMT model 1P28.

The following references to the known art should be noted:
a) the Hamamatsu PMT Manual - paragraph 7.3.4, p. 186 and 187, which describes the rapid output circuits used as photon counters;
b) the Application Note R/P096 by the company Electron Tubes Ltd., Ruislip, Bury Street 7TA, UK, which describes the rapid output circuits used as photon counters, characterised by a specific power supply voltage;
c) the Application Note AN51, by the company Oak Ridge Inc., 801 South Illinois Ave., Oak Ridge, TN 37831-0895 U.S.A., which describes the performance required of the control electronics of the PMT signals for photon counters, and the impedance matching circuits of the coaxial output line towards the amplification electronics;
d) the publication "PMT Fast-Timing Discriminator" by the company Oak Ridge Inc., 801 South Illinois Ave., Oak Ridge, TN - U.S.A., which details the problems correlated with counting of the photons and illustrates in a block diagram possible electronics for modifying the shape of the signals generated by the PMT.

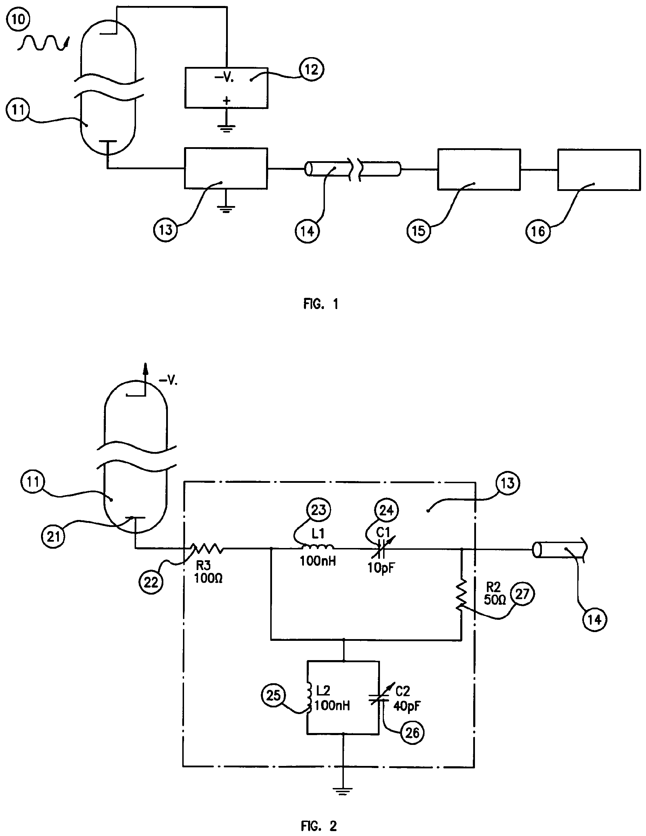

The functional block diagram of the device subject of the present invention is illustrated in the attached figure 1 in which the following details are highlighted: the input signal comprising a light beam 10, a photomultiplier or PMT 11 suitable for performing a photon-electron conversion, a high voltage power supply unit 12, a pulse modification circuit 13, a coaxial connection line 14 between said pulse modification circuit 13 and an analogue-digital converter circuit 15 able to drive a digital counter circuit 16.

With reference to fig. 2, which illustrates the wiring diagram of a preferred embodiment of said pulse modification circuit 13, the following component parts can be identified:
A first resistor R3 22 connected by a first terminal to the plate 21 of said PMT 11 and by a second terminal both to the first terminal of a first LC filter of series type and to the first terminal of an LC filter of parallel type. Said first LC filter of series type comprises an inductor L1 23 and a capacitor C1 24, of the type having a fixed or variable capacity value, and said LC filter of parallel type comprises an inductor L2 25 and a capacitor C2 26, also of the type having a fixed or variable capacity value.

The second terminal of said first LC filter of series type is connected to the coaxial line 14 and to the first terminal of a second resistor R2 27, the second terminal of which is connected to the first terminal of said first LC filter of parallel type, the second terminal of said first LC filter of parallel type being connected to the ground reference of the circuit.

The input resistor to the pulse formation circuit 13 is the resistor seen downstream of the plate 21 of the PMT 11; said first resistor R3 22 constitutes the load resistance of said pulse modification circuit 13, while said second resistor R2 27 constitutes the output resistance of said pulse modification circuit 13 towards said coaxial line 14. Said first and second resistor R3 22, R2 27 constitute the impedance matching module of the device according to the present invention.

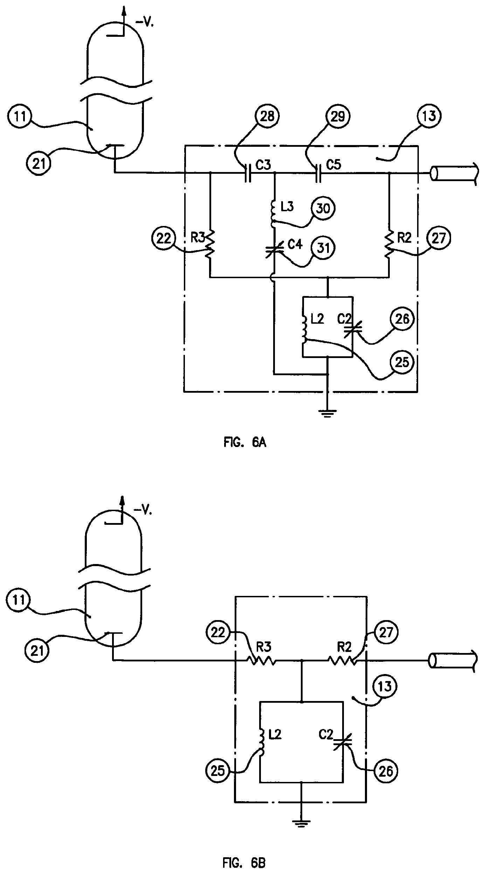

With reference to the attached figure 6a a further preferred embodiment of said pulse modification circuit 13 is illustrated which, with respect to the preferred embodiment illustrated in figure 2, produce a different modification effect.

In the preferred embodiment illustrated in figure 6a, said first LC filter of series type is replaced by an LC filter having a "T" comprising: a first capacitor C3 28 having a first terminal connected to the second terminal of said first resistor R3 22 and a second terminal connected to the first terminal of a second LC filter of series type comprising an inductor L3 30 and a capacitor C5 31, of the type having a fixed or variable capacity value; a second capacitor C5 29 having a first terminal connected to the second terminal of said first capacitor C3 28 and to the first terminal of said second LC filter of series type, the second terminal of said second LC filter of series type being connected to the ground of the circuit.

Also in this further preferred embodiment of the present invention the input resistor to the pulse shaping circuit 13 is the resistor seen downstream of the plate 21 of the PMT 11; said first resistor R3 22 constitutes the input resistance of said pulse modification circuit 13, while said second resistor R2 27 constitutes the output resistance of said pulse modification circuit 13 towards said coaxial line 14. The device subject of the present invention therefore comprises a PMT, an adjustable high voltage power supply unit provided with the outputs necessary to power the cathode, the anode and the intermediate dynodes of said PMT, and a pulse modification circuit 13.

Said pulse modification circuit 13 can be advantageously produced using both active and passive components. The present application describes preferred embodiments of circuits based exclusively on passive components which offer advantages in terms of cost and lifetime: the above-mentioned preferred embodiments are cited by way of non-limiting example and the present invention must be considered as referring also to solutions which use active components. Active components, for example, could be used to enable or disable, upon external command, circuit parts of the device according to the present invention or again to introduce non-linearities depending on the signals to be processed. Preferably said resistor R2 27, the value of which corresponds to the characteristic impedance of the line 14 connecting to the analogue-digital converter circuit entering the digital section 15, will have a value of 50 Ohm.

Said LC filters of series or parallel type, which constitute as a whole the filtering module of the device according to the present invention, are characterised by different time delay effects, which are lesser for said first LC filter of series type comprising the series resonant circuit consisting of the components L1 23 and C1 24, and greater for said first LC filter of parallel type comprising the parallel resonant circuit consisting of the components L2 25 and C2 26.

As explained in the Publication 062-1244-00 Time-Domain Reflectometry Measurements by Tektronix, Inc-Beaverton, Oregon (USA), the use of said components allows significant modification of the time response of the pulses, and in our case the particular circuit chosen allows, via the parallel LC circuit, a considerable reduction in the fall time of the pulse which tends to take on values close to the rise values and, via the series LC circuit, modification of the final part of the pulse.

The use of said capacitors, of the type having a fixed or variable capacity value, C1 24 and C2 26, allow adaptation of the device subject of the present invention to the electrical characteristics of the specific PMT used, thus optimising the characteristic of the output pulse.

The present invention furthermore solves the technical problems of the PMT circuits in the state of the art relative to the fact that both any background light and the increase in frequency of the output pulses necessarily introduce at the input a continuous voltage component, proportionally increasing with the frequency of the pulses. Said continuous voltage represents an undesired variable amplitude offset which requires additional compensation circuitry in the analogue-digital converter circuit 15, suitable for driving the digital counter circuit 16.

The device subject of the present invention is connected to the ground of said power supply unit via the electric resistor of said inductor L2 25 - which is in the order of a few mOhm - thus permitting annulment of all signal voltage drifts due both to the continuous component connected with any background light and with the frequency of the output pulses and any disturbances present in the PMT circuit, without having to resort to using the capacitive coupling usually adopted in devices in the state of the art: the electrical resistor of said inductor L2 25 furthermore allows effective filtering of the background noise and simultaneously stabilises the threshold work point of the analogue-digital converter circuit 15, more specifically of the trigger threshold of the pulse shaping circuit or pulse shaper of said analogue-digital converter 15.

With reference to the attached Fig. 2, the anode resistor R3 22 is inserted between the anode of the PMT 20 and the ground (disregarding the resistor of the inductor L2 25 which is in the order of a few mOhm), so that the voltage signal provided by the anode current has a negative sign, and likewise the leading edge of the anode current pulse: this arrangement is recommended for example by Hamamatsu Photonics K.K. in the manual "Photon Counting using PMT" - Chapter 6 p. 170 - Fast-Timing Discriminators, Ed. April 2001.

The result of the filter action of the device according to the present invention, thanks to application of the energy for different times in the series resonant circuit and the parallel resonant circuit, due to the capacity of the capacitors C1 24 and C2 26, allows a considerable reduction in the pulse fall time which tends to take on values close to the rise values, greatly improving operation of the comparator stage downstream, achieving inversion of the sign from the pulse which is completed in a time equivalent to approximately five times the rise time declared by the manufacturer.

The inversion of the sign from the pulse thus modified allows simplification of operation of the analogue-digital converter circuit stage 15, able to drive the digital counter circuit 16, which is activated during the leading edge when the pre-set negative threshold is crossed, and is re-set at the moment the polarity changes from negative to positive values.

Furthermore, the device according to the present invention helps to minimise the production of double pulses, defined as afterpulses in the PMT manual by Hamamatsu - paragraph 3.3.8, p. 73, and lastly allows minimisation of the count block time between two successive pulses making a much higher maximum count frequency possible, with an increase in the system response dynamics.

By way of example, using the PMT mod. 1P28 cited, in the conventional configuration, the duration of said block time is fixed at approximately 20 nanoseconds, whereas when the device according to the present invention is used, said value is reduced to approximately 5 nanoseconds.

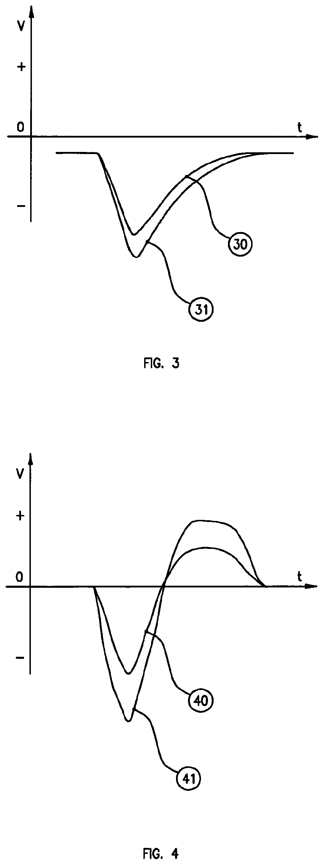

The attached figures 3 and 4 show an example of the effect of application of the device according to the present invention to a PMT. Figure 3 illustrates two pulses produced on the plate resistor in the traditional configuration with two photons of monochromatic light and therefore characterised by equal energy, but emitted with different trajectories and impact positions on the photocathode and therefore corresponding to emissions of photoelectrons with different apparent energy. The pulse indicated by number 30 is the one produced by lesser apparent energy, whereas the pulse indicated by number 31 is the one produced by greater apparent energy. The two pulses illustrated in figure 4 are detected downstream of the device according to the present invention. They are produced by two photons of equal energy with different trajectories and impact positions on the photocathode, and the number 40 indicates the one produced by lesser apparent energy whereas the number 41 indicates the one produced by greater apparent energy.

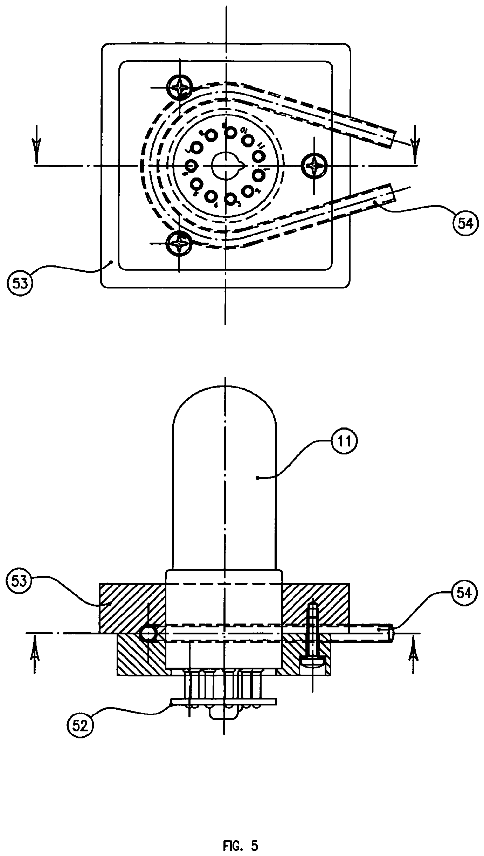

With reference to the attached figure 5, a preferred embodiment of the device according to the present invention provides for complete implementation of a PMT comprising the body of said PMT 11 combined with the device according to the present invention 52 and mechanically connected to the photoelectric signal measuring apparatus by means of the support 53 which in turn comprises the conduit 54 through which a cooling liquid is passed having the function of thermostating said PMT.

In this way it is possible to control the work temperature of the PMT, thus eliminating the undesired effect of the variation in background noise depending significantly on the temperature.

The structure described can be implemented very simply in application of the device according to the present invention to machines for measuring the weak chemiluminescence light in which both samples and reagents must be kept thermostated at approximately 8°C. In these appliances, cooled water is usually circulated by means of a hydraulic circuit and it is simple to insert the conduit 54 in said hydraulic circuit, thus guaranteeing minimisation of the PMT background noise and therefore gaining sensitivity for the measurement of very weak signals.

The device according to the present invention, preferably combined with a dedicated printed circuit - mounted directly on the base of the PMT in order to minimise the physical length of the wiring - allows, via the innovative output circuit which constitutes the core of the invention subject of the present patent application, modification of the shape of the pulse produced by the PMT as an effect of the detection of the single photon, increase in the gain, increase in the working life, filtering of broadband disturbances and matching of the output impedance with that of the coaxial line 14 connecting to the analogue-digital converter downstream (typically 50 Ohm) in order to avoid distortions and echoes which could be caused by impedance mismatching.

The above-mentioned impedance matching and broadband filtering characteristics furthermore allow reduction of the pulse current in the PMT.

By way of non-limiting example, if the anode resistor 22 adopted is fixed at 100 Ohm instead of 50 Ohm (as reiterated in the publications in the state of the art cited) we obtain either a voltage pulse of equal amplitude with a current reduced by 50% resulting in limitation of the maximum current in order to protect the PMT, increasing its working life, or a voltage pulse of double amplitude with equal current, thus obtaining improved accuracy of the analogue-digital converter circuit at the input to the next digital counter section.

## Claims

1. A device for modifying the shape and reducing the duration of the current impulses generated by single photons in light detectors, comprising: a photomultiplier tube (PMT) (11), a high voltage power supply unit (12) associated to said photomultiplier tube (11), a pulse modification circuit (13) associated to said photomultiplier tube (11), a coaxial line (14) associated to said pulse modification circuit (13) **characterized in that** said pulse modification circuit (13) comprises a first resistor R3 (22) connected to a collecting plate (21) of said PMT (11) by means of the first terminal, and to the first terminal of an LC filter of parallel type (25, 26) by means of the second terminal; a second resistor R2 (27) connected to the first terminal of said LC filter of parallel type (25, 26) by means of the first terminal, and, by means of the second terminal, to said coaxial line (14); a first LC filter of series type (23, 24) connected to the second terminal of said first resistor R3 (22) by means of a first terminal, and to the second terminal of said second resistor R2 (27) by means of the second terminal, wherein the second terminal of said LC filter of parallel type (25, 26) is connected to the ground reference of the circuit.

2. The device according to claim 1, wherein said first resistor R3 (22) has a value of 100 ohms, said second resistor R2 (27) has a value of 50 ohms, said first LC filter of series type comprises an inductor L1 (23) having 100nH and a capacitor C1 (24) having 10 pF and said LC filter of parallel type comprises an inductor L2 (25) having 100nH and a capacitor C2 (26) having 40 pF.

3. The device according to claims 1 - 2 wherein said first LC filter of series type comprises a capacitor C1 (24) of the type having a fixed or variable capacity value.

4. A device for modifying the shape and reducing the duration of the current impulses generated by single photons in light detectors, comprising: a photomultiplier tube (PMT) (11), a high voltage power supply unit (12) associated to said photomultiplier tube (11), a pulse modification circuit (13) associated to said photomultiplier tube (11), a coaxial line (14) associated to said pulse modification circuit (13) **characterized in that** said pulse modification circuit (13) comprises a first resistor R3 (22) connected to a collecting plate (21) of said PMT (11) by means of the first terminal, and to the first terminal of an LC filter of parallel type (25, 26) by means of the second terminal; a second resistor R2 (27) connected to the first terminal of said LC filter of parallel type (25, 26) by means of the first terminal, and, by means of the second terminal, to said coaxial line (14); an LC filter forming a "T" shape comprising: a first capacitor C3 (28) having a first terminal connected to the second terminal of said first resistor R3 (22) and a second terminal connected to the first terminal of a second LC filter of series type (30, 31); a second capacitor C5 (29) having a first terminal connected to the first terminal of said second LC filter of series type (30, 31), and a second terminal connected to the second terminal of said second resistor R2 (27), wherein the second terminal of said second LC filter of series type (30, 31) is connected to the ground reference of the circuit.

5. The device according to claim 4 wherein said second LC filter of series type comprises a capacitor C4 (31) of the type having a fixed or variable capacity value.

6. The device according to claims 1-5 , wherein said pulse modification circuit (13) further comprises active components, adapted to enable or to disable parts of said pulse modification circuit (13) upon external command, or to introduce non-linearities depending on the signals to be processed.

7. The device according to claims 1-6, comprising a dedicated printed circuit adapted to be directly mounted on the base of said PMT (11).

8. The device according to claim 7, wherein said PMT (11) is mechanically connected to the apparatus for measuring the photoelectric signal by means of a specific support (53) comprising a conduit (54) adapted to circulate a cooling fluid serving the function of thermostating said PMT (11).

9. The device according to claims 1-8 wherein said LC filter of parallel type, comprises a capacitor C2 (26), of the type having a fixed or variable capacity value.

## Patentansprüche

1. Vorrichtung zum Modifizieren der Gestalt und zum Verringern der Dauer der Stromimpulse, die von einzelnen Photonen in Lichtdetektoren erzeugt werden, umfassend: eine Photovervielfacherröhre (PMT) (11), eine mit der Photovervielfacherröhre (11) verbundene Hochspannungs-Stromversorgungseinheit (12), eine mit der Photovervielfacherröhre (11) verbundene Impulsmodifikationsschaltung (13) und eine mit der Impulsmodifikationsschaltung (13) verbundene Koaxialleitung (14), **dadurch gekennzeichnet, dass** die Impulsmodifikationsschaltung (13) umfasst:
einen ersten Widerstand R3 (22), der über den ersten Anschluss mit einer Sammelscheibe (21) der PMT (11) und über den zweiten Anschluss mit dem ersten Anschluss eines LC-Filters vom parallelen Typ (25, 26) verbunden ist;
einen zweiten Widerstand R2 (27), der über den ersten Anschluss mit dem ersten Anschluss des LC-Filters vom parallelen Typ (25, 26) und über den zweiten Anschluss mit der Koaxialleitung (14) verbunden ist; ein erstes LC-Filter vom seriellen Typ (23, 24), das mit dem zweiten Anschluss des ersten Widerstands R3 (22) über einen ersten Anschluss und mit dem zweiten Anschluss des zweiten Widerstands R2 (27) über den zweiten Anschluss verbunden ist, wobei der zweite Anschluss des LC-Filters vom parallelen Typ (25, 26) mit der Massereferenz der Schaltung verbunden ist.

2. Vorrichtung nach Anspruch 1, wobei der erste Widerstand R3 (22) einen Wert von 100 Ohm aufweist, der zweite Widerstand R2 (27) einen Wert von 50 Ohm aufweist, das erste LC-Filter vom seriellen Typ eine Induktivität L1 (23) mit 100 nH und einen Kondensator C1 (24) mit 10 pF umfasst und das LC-Filter vom parallelen Typ eine Induktivität L2 (25) mit 100 nH und einen Kondensator C2 (26) mit 40 pF umfasst.

3. Vorrichtung nach Anspruch 1-2, wobei das erste LC-Filter vom seriellen Typ einen Kondensator C1 (24) des Typs umfasst, der einen festen oder variablen Kapazitätswert aufweist.

4. Vorrichtung zum Modifizieren der Gestalt und zum Verringern der Dauer der Stromimpulse, die von einzelnen Photonen in Lichtdetektoren erzeugt werden, umfassend: eine Photovervielfacherröhre (PMT) (11), eine mit der Photovervielfacherröhre (11) verbundene Hochspannungs-Stromversorgungseinheit (12), eine mit der Photovervielfacherröhre (11) verbundene Impulsmodifikationsschaltung (13) und eine mit der Impulsmodifikationsschaltung (13) verbundene Koaxialleitung (14), **dadurch gekennzeichnet, dass** die Impulsmodifikationsschaltung (13) umfasst:
einen ersten Widerstand R3 (22), der über den ersten Anschluss mit einer Sammelscheibe (21) der PMT (11) und über den zweiten Anschluss mit dem ersten Anschluss eines LC-Filters vom parallelen Typ (25, 26) verbunden ist;
einen zweiten Widerstand R2 (27), der über den ersten Anschluss mit dem ersten Anschluss des LC-Filters vom parallelen Typ (25, 26) und über den zweiten Anschluss mit der Koaxialleitung (14) verbunden ist; ein LC-Filter, das eine "T"-Gestalt bildet, umfassend: einen ersten Kondensator C3 (28) mit einem ersten Anschluss, der mit dem zweiten Anschluss des ersten Widerstands R3 (22) verbunden ist, und mit einem zweiten Anschluss, der mit dem ersten Anschluss eines zweiten LC-Filters vom seriellen Typ (30, 31) verbunden ist; einen zweiten Kondensator C5 (29) mit einem ersten Anschluss, der mit dem ersten Anschluss des zweiten LC-Filters vom seriellen Typ (30, 31) verbunden ist, und mit einem zweiten Anschluss, der mit dem zweiten Anschluss des zweiten Widerstands R2 (27) verbunden ist, wobei der zweite Anschluss des zweiten LC-Filters vom seriellen Typ (30, 31) mit der Massereferenz der Schaltung verbunden ist.

5. Vorrichtung nach Anspruch 4, wobei das zweite LC-Filter vom seriellen Typ einen Kondensator C4 (31) des Typs umfasst, der einen festen oder variablen Kapazitätswert aufweist.

6. Vorrichtung nach Anspruch 1-5, wobei die Impulsmodifikationsschaltung (13) ferner aktive Komponenten umfasst, die angepasst sind, um auf einen externen Befehl hin Teile der Impulsmodifikationsschaltung (13) zu aktivieren oder zu deaktivieren, oder um in Abhängigkeit von den zu verarbeitenden Signalen Nichtlinearitäten einzubringen.

7. Vorrichtung nach Anspruch 1-6, die eine dedizierte gedruckte Schaltung umfasst, die angepasst ist, um an der Basis der PMT (11) direkt montiert zu werden.

8. Vorrichtung nach Anspruch 7, wobei die PMT (11) mit dem Gerät zum Messen des photoelektrischen Signals über eine spezielle Halterung (53) mechanisch verbunden ist, die eine Rohrleitung (54) umfasst, die angepasst ist, um ein Kühlfluid zirkulieren zu lassen, das der Funktion der Temperaturregelung der PMT (11) dient.

9. Vorrichtung nach Anspruch 1-8, wobei das LC-Filter vom parallelen Typ einen Kondensator C2 (26) des Typs umfasst, der einen festen oder variablen Kapazitätswert aufweist.

## Revendications

1. Dispositif de modification de la forme et de réduction de la durée des impulsions de courant générées par des photons uniques dans des détecteurs de lumière, comprenant : un tube photomultiplicateur (PMT) (11), une unité d'alimentation électrique haute tension (12) associée audit tube photomultiplicateur (11), un circuit de modification d'impulsion (13) associé audit tube photomultiplicateur (11), une ligne coaxiale (14) associée audit circuit de modification d'impulsion (13), **caractérisé en ce que** ledit circuit de modification d'impulsion (13) comprend un premier résistor R3 (22) connecté à une plaque collectrice (21) dudit PMT (11) au moyen de la première borne, et à la première borne d'un filtre LC de type parallèle (25, 26) au moyen de la seconde borne ; un second résistor R2 (27) connecté à la première borne dudit filtre LC de type parallèle (25, 26) au moyen de la première borne, et, au moyen de la seconde borne, à ladite ligne coaxiale (14) ; un premier filtre LC de type série (23, 24) connecté à la seconde borne dudit premier résistor R3 (22) au moyen d'une première borne, et à la seconde borne dudit second résistor R2 (27) au moyen de la seconde borne, dans lequel la seconde borne dudit filtre LC de type parallèle (25, 26) est connectée à la référence de terre du circuit.

2. Dispositif selon la revendication 1, dans lequel ledit premier résistor R3 (22) a une valeur de 100 ohms, ledit second résistor R2 (27) a une valeur de 50 ohms, ledit premier filtre LC de type série comprend une inductance L1 (23) ayant 100 nH et un condensateur C1 (24) ayant 10 pF et ledit filtre LC de type parallèle comprend une inductance L2 (25) ayant 100 nH et un condensateur C2 (26) ayant 40 pF.

3. Dispositif selon les revendications 1 et 2, dans lequel ledit premier filtre LC de type série comprend un condensateur C1 (24) du type ayant une valeur de capacité fixe ou variable.

4. Dispositif de modification de la forme et de réduction de la durée des impulsions de courant générées par des photons uniques dans des détecteurs de lumière, comprenant : un tube photomultiplicateur (PMT) (11), une unité d'alimentation électrique haute tension (12) associée audit tube photomultiplicateur (11), un circuit de modification d'impulsion (13) associé audit tube photomultiplicateur (11), une ligne coaxiale (14) associée audit circuit de modification d'impulsion (13), **caractérisé en ce que** ledit circuit de modification d'impulsion (13) comprend un premier résistor R3 (22) connecté à une plaque collectrice (21) dudit PMT (11) au moyen de la première borne, et à la première borne d'un filtre LC de type parallèle (25, 26) au moyen de la seconde borne ; un second résistor R2 (27) connecté à la première borne dudit filtre LC de type parallèle (25, 26) au moyen de la première borne, et, au moyen de la seconde borne, à ladite ligne coaxiale (14) ; un filtre LC formant une forme en « T » comprenant : un premier condensateur C3 (28) ayant une première borne connectée à la seconde borne dudit premier résistor R3 (22) et une seconde borne connectée à la première borne d'un second filtre LC de type série (30, 31) ; un second condensateur C5 (29) ayant une première borne connectée à la première borne dudit second filtre LC de type série (30, 31), et une seconde borne connectée à la seconde borne dudit second résistor R2 (27), dans lequel la seconde borne dudit second filtre LC de type série (30, 31) est connectée à la référence de terre du circuit.

5. Dispositif selon la revendication 4, dans lequel ledit second filtre LC de type série comprend un condensateur C4 (31) du type ayant une valeur de capacité fixe ou variable.

6. Dispositif selon les revendications 1 à 5, dans lequel ledit circuit de modification d'impulsion (13) comprend en outre des composants actifs, adaptés pour activer ou pour désactiver des parties dudit circuit de modification d'impulsion (13) sur commande externe, ou pour introduire des non-linéarités selon les signaux à traiter.

7. Dispositif selon les revendications 1 à 6, comprenant un circuit imprimé dédié adapté pour être monté directement sur la base dudit PMT (11).

8. Dispositif selon la revendication 7, dans lequel ledit PMT (11) est connecté mécaniquement à l'appareil pour mesurer le signal photoélectrique au moyen d'un support spécifique (53) comprenant un conduit (54) adapté pour faire circuler un fluide de refroidissement ayant pour fonction de réguler par thermostat ledit PMT (11).

9. Dispositif selon les revendications 1 à 8, dans lequel ledit filtre LC de type parallèle, comprend un condensateur C2 (26), du type ayant une valeur de capacité fixe ou variable.
